# EUROPEAN PATENT SPECIFICATION

(11) **EP 2 275 352 B1**
(45) Date of publication and mention of the grant of the patent: **06.06.2012**
(21) Application number: 08761468.1
(22) Date of filing: 10.04.2008
(51) Int. Cl.: B65D 5/00

(54) **CONTAINER FOR FRESH FISH AND SIMILAR GOODS**
BEHÄLTER FÜR FRISCHEN FISCH UND ÄHNLICHE WAREN
EMBALLAGE POUR POISSON FRAIS ET PRODUITS SIMILAIRES

(43) Date of publication of application: 19.01.2011
(73) Proprietor: Papeles Y Cartones De Europa, S. A., Palencia (ES)
(72) Inventor: ENRIQUE ISIDRO RINCON, 34201 Dueñas Palencia (ES)
(74) Representative: Polo Flores, Carlos
(86) International application number: PCT/ES2008/000221
(87) International publication number: WO 2009/125025

(56) References cited:
- ES-U- 1 061 850
- FR-A1- 2 460 256
- FR-A1- 2 463 066
- FR-A1- 2 655 618
- FR-A1- 2 676 991
- FR-A5- 2 216 812
- PT-T- 10 178

## Description

This invention relates to a packing for fresh fish according to the preamble of claim 1, This packing may also be used to pack other similar products, i.e. those which require refrigerated transport, a packing that is composed of a cardboard box capable of maintaining its mechanical characteristics during the time period necessary for the distribution of fish.

The object of the invention is to obtain a cardboard packing with a high mechanical resistance, which is practically non-deformable under the humidity and cold conditions whereto it will be subject during commercialisation of the fish.

Therefore, the invention belongs to the field of cardboard box manufacturing for the logistics of fresh fish and similar products.

### BACKGROUND OF THE INVENTION

To date, in the field of packing boxes, corrugated cardboard has been used, which, in its simplest version, is structured by three "sandwiched" paper layers, two external flat parallel layers, and an intermediate corrugated layer.

When, due to the nature of the product to be packed, significant resistance to humid, cold environmental conditions is required, the main option selected by the market for the logistics of fresh fish and similar products is to use expanded-polystyrene boxes.

The problem with this type of boxing or packing lies mainly in the nature of the material they are made of, since it is a pollutant, i.e. a product that has harmful environmental effects and poses recycling problems. Moreover, since the product is petroleum-based, the availability and price thereof are directly affected by the conditions in the international oil market.

This problem disappears or is drastically reduced when corrugated cardboard is used, but the applicant is not aware of the existence of cardboard boxes that are suitable for the transport of fresh fish and other similar products, and which are also capable of maintaining their mechanical characteristics for over 72 hours, which is the maximum time in the logistics chain for these products, under the humid, cold environments repeatedly mentioned above.

The document FR -A- 2 460 256 discloses a box for fruits and groceries which is aimed at its hand assembly by the introduction of multiple flaps into cuts of the laminar body of the box to permit the erection of the box. However no provision is made of tubular reinforcements in the vertical edges of the box, nor covering wings thereto.

### DESCRIPTION OF THE INVENTION

The packing proposed by the invention comprises the features of claim 1 and solves, in a fully satisfactory manner, the abovementioned problems, while allowing for a manoeuvrability within the logistics chain which similar to that which has been obtained to date, but of a recyclable nature.

These effects are jointly achieved thanks to the special, specific configuration of the box that constitutes the packing, as well as the structuring of the laminar body that participates therein.

More specifically, the proposed packing or box comprises all features of claim 1.

Due to this this structuring, once it is assembled, the box offers a high degree of insulation against humidity and it practically has no direct access other than the small windows of the ledges acting as handles; the barrier effect against humidity is complemented by the use, in at least one of the corrugated cardboard layers, of a waterproofing agent and by placing a fibreglass mesh inside said cardboard, which gives the box the adequate structural rigidity, especially the central sector thereof, that which makes up the bottom and which, due to its large dimensions and flatness, tends toward buckling.

Thus, it is possible to maintain the mechanical conditions of the packing for 72 hours in humid, cold environments, allowing for manoeuvrability of the packing within the logistics chain, under identical conditions to those that apply to expanded-polystyrene packings, and without the problems inherent to the recycling of this kind of product.

### DESCRIPTION OF THE DRAWINGS

In order to complement the present description and contribute to a better understanding of the characteristics of the invention, in accordance with a preferred practical embodiment example thereof, a set of drawings is attached as an integral part of said description, where the following have been represented for illustrative, non-limiting purposes:
- Figure 1: shows a plan development of a cardboard box made in accordance with the packing for fresh fish and similar products proposed herein.
- Figure 2: shows a perspective view of an intermediate folding phase of the box of the previous figure.
- Figure 3: shows, finally, also in a perspective view, the same box of the previous figures, definitively mounted or assembled.

### PREFERRED EMBODIMENT OF THE INVENTION

In view of the figures mentioned, it can be observed that the proposed box is composed of a laminar, one-piece body (1), basically made of corrugated cardboard, wherein, by means of die-cutting, a broad rectangular central sector (2) is defined, corresponding to the bottom of the box and delimited by folding lines (3) that connect it to a pair of jambs (4) and another pair of ledges (5), the latter being provided, at the centre of the lower edge, with slots (6) that act as handles for the box.

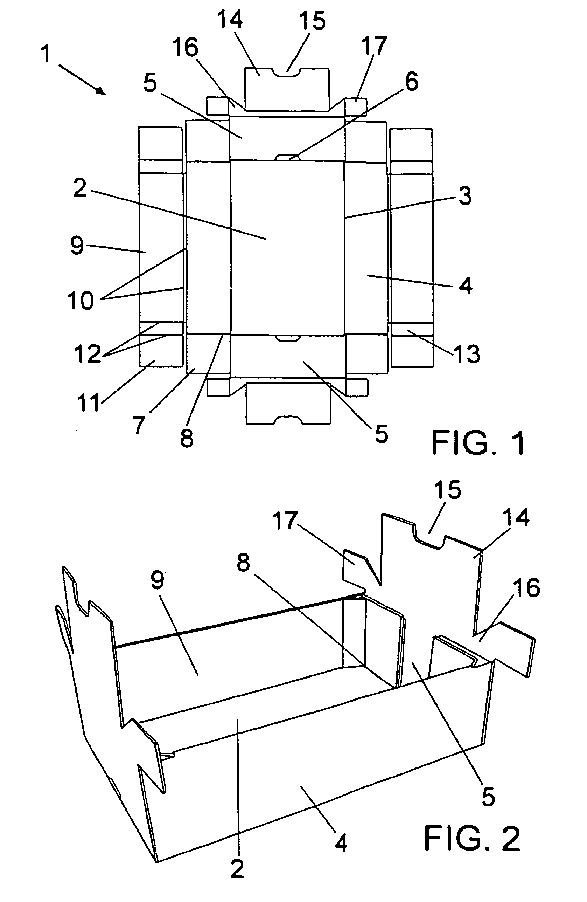

Each jamb (4) has end extensions (7) delimited by folding lines (8), such that these extensions (7) can be adapted and fixed to the inner face of the ledges (5), as can be observed particularly in figure 2.

Each jamb (4) is double and, in addition to the proximal sector described, corresponding to figure 4, has a terminal or end sector (9) that may be tilted onto the inner face of the sector (4) through a double folding line (10); these end portions (9) of the jambs also have end extensions (11) that start before reaching the level of the corresponding ledge, as can be observed particularly in figure 1, and which incorporate two folding lines (12), such that, following tilting of the portion (9) of the jambs on portion (4), after adapting the extensions (7) to the ledges (5), these extensions (11) may also be adapted to the inner face of the extensions (7), while simultaneously shaping a tubular, prismatic, triangular-section reinforcement (13), in correspondence with each of the vertical edges of the box.

A similar situation affects the ends (5), which are also provided with a terminal or end portion (14) that may be tilted onto the inner face thereof and is provided with an indentation (15) that formally, dimensionally and positionally coincides with the indentation (6) mentioned above and which participates with the latter in making up a handle for the box.

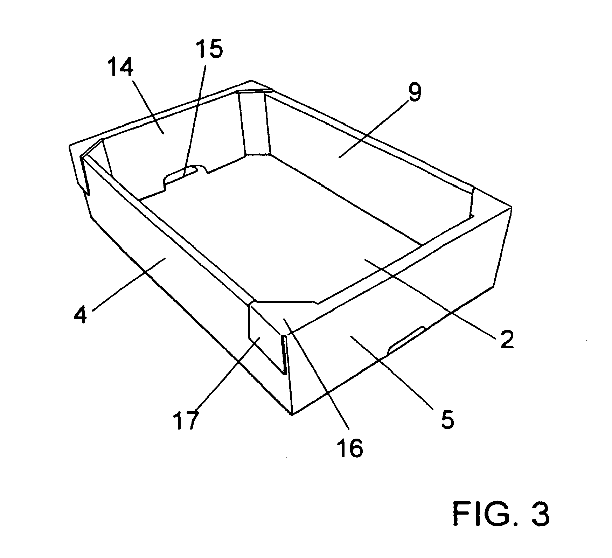

As may also be observed in figure 1, this end or terminal portion (14) of each ledge is shorter than the proximal portion (15), such that small-sized, straight trapezoidal wings (16) are located on both sides thereof; when the box is assembled, these wings cover the upper end of the tubular reinforcements (13); moreover, said wings (16) are provided with small flaps (17) that can be tilted onto and fixed to the outer face of the jambs (4) by means of an adhesive, as can be perfectly observed in figure 3.

This structuring makes it possible to obtain a box that offers a great difficulty to the penetration of humidity inside the corrugated cardboard; furthermore, in order to enhance this effect, it is proposed that at least one of the layers of said corrugated cardboard, preferably the two external layers thereof, is made of paper with different waterproofing compounds, depending on the specific packing needs in each case.

When the box is of large dimensions, such as, for example, for 10 kg of fish, the size required for the central sector (2) may generate buckling problems or a tendency to deformation; to this end, it is specified that a fibreglass mesh be inserted in the cardboard laminar body (1), conveniently fixed to the rest of the cardboard by means of a polyethylene layer wherein it is immersed; this mesh offers the overall box a significant increase in mechanical rigidity

In this way, a box is obtained that is capable of bearing extreme humidity and cold conditions for 72 hours, the time necessary for the logistics of fresh fish and other similar products, maintaining its mechanical conditions, i.e. perfectly bearing the stresses caused by the stacking with other similar boxes that usually takes place upon storing and transporting them.

## Claims

1. Packing for fresh fish and similar products, of the type designed to bear extreme humidity and cold conditions for a considerable period of time, of the type that is composed of a laminar cardboard with a box body (1) made of double jambs (4, 9) and ledges (5, 14), said jambs (4-9) having respective end extensions (7-11), **characterised in that** the terminal portions (9) of the jambs are shorter than the outer portions (4) of the jambs, such that each of the end extensions (11) of the terminal portions (9) of the jambs incorporate two transverse folding lines (12), the end extensions upon being adapted to the inner face of the corresponding ledge (5), define tubular reinforcements (13) in correspondence with the vertical edges of the box; moreover, the terminal portions (14) of the ledges (5, 14) are shorter than the proximal portions (5) thereof; on both sides of said terminal portions (14), respective small trapezoidal wings (16) are placed; theses wings cover the upper ends of the tubular reinforcements (13) of the vertical edges of the box and are finished off by flaps (17) that are tilted onto and fixed to the outer face of the jambs (4); the laminar cardboard is structured by means of two external flat sheets of paper and an intermediate corrugated sheet, wherein at least one of these three sheets is provided with waterproofing compounds and a fibreglass mesh is inserted in the laminar cardboard which is stabilised with respect to the rest of the cardboard by means of a polyethylene layer.

## Patentansprüche

1. Verpackung für frischen Fisch und ähnliche Produkte, von der Art, die dafür ausgelegt ist, während eines beträchtlichen Zeitraums extrem feuchten und kalten Bedingungen zu widerstehen, von der Art, die aus einer laminaren Pappe mit einem schachtelförmigen Körper (1) gebildet ist, der aus doppelten Seitenteilen (4, 9) und Leisten (5, 14) besteht, wobei die besagten Seitenteile (4, 9) entsprechende Endverlängerungen (7-11) besitzen, **dadurch gekennzeichnet, dass** die Endabschnitte (9) der Seitenteile kürzer als die äußeren Abschnitte (4) der Seitenteile sind, sodass jede der Endverlängerungen (11) der Endabschnitte (9) der Seitenteile zwei quer verlaufende Falzlinien (12) besitzt, wobei die Endverlängerungen, da diese an die Innenseite der entsprechenden Leiste (5) angepasst sind, röhrenförmige Verstärkungen (13) in Übereinstimmung mit den vertikalen Kanten der Schachtel definieren; darüber hinaus sind die Endabschnitte (14) der Leisten (5, 14) kürzer als der näher zur Körpermitte liegende Abschnitt (5) derselben; auf beiden Seiten der besagten Endabschnitte (14) sind entsprechende kleine trapezförmige Flügel (16) angeordnet; diese Flügel decken die oberen Enden der röhrenförmigen Verstärkungen (13) der vertikalen Kanten der Schachtel ab und werden von den Lasche (17) abgeschlossen, die zur Außenseite der Seitenteile (4) umgeknickt und befestigt werden; die laminare Pappe wird mit zwei externen flachen Bögen und einem gewellten Zwischenbogen strukturiert, wobei mindestens einer dieser drei Bogen mit Wasser abdichtenden Verbindungen ausgestattet und eine Glasfaserwolle in die laminare Pappe eingeführt ist, die gegenüber der restlichen Pappe durch eine Polyethylenrchicht stabilisiert ist.

## Revendications

1. Emballage pour poisson frais et produits similaires, du type de ceux conçus pour supporter des conditions extrêmes d'humidité et de froid durant une période de temps importante, du type de ceux qui sont composés d'un carton laminaire avec un corps de boîte (1) fait de doubles montants (4, 9) et rebords (5, 14), lesdits montants (4, 9) possédant des extensions d'extrémité respectives (7, 11), **caractérisé en ce que** les parties terminales (9) des montants sont plus courtes que les parties externes (4) des montants, de telle façon que chacune des extensions d'extrémité (11) des parties terminales (9) des montants comporte deux lignes de pliage transversales (12), les extensions d'extrémité étant dessus adaptées à la face interne du rebord correspondant (5), définissent des renforcements tubulaires (13) en correspondance avec les bords verticaux de la boîte; de plus, les parties terminales (14) des rebords (5, 14) sont plus courtes que leurs parties proximales (5) ; des deux côtés desdites parties terminales (14), de petites ailes trapézoïdales respectives (16) sont placées ; ces ailes couvrent les extrémités supérieures des renforcements tubulaires (13) des bords verticaux de la boîte et sont terminées par des rabats (17) qui sont inclines sur et fixés à la face externe des montants (4) ; le carton laminaire est structuré au moyen de deux feuilles de papier externes plates et d'une feuille intermédiaire ondulée, où au moins l'une de ces trois feuilles comporte des composés imperméabilisants et un filet en fibre de verre est inséré dans le carton laminaire qui est stabilisé par rapport au reste du carton à l'aide d'une couche de polyéthylène.
